# EUROPÄISCHE PATENTSCHRIFT

(11) **EP 1 868 702 B1**
(45) Veröffentlichungstag und Bekanntmachung des Hinweises auf die Patenterteilung: **16.09.2009**
(21) Anmeldenummer: 05714699.5
(22) Anmeldetag: 16.03.2005
(51) Int. Cl.: B01D 33/03, B07B 1/48

(54) **VIBRATIONSSIEBMASCHINE FÜR ASPHALTMISCHANLAGEN**
VIBRATION SIEVE MACHINE FOR ASPHALT MIXING PLANTS
DISPOSITIF DE CRIBLAGE VIBRANT CONÇU POUR DES INSTALLATIONS DE MELANGE D'ASPHALTE

(43) Veröffentlichungstag der Anmeldung: 26.12.2007
(73) Patentinhaber: Ammann Schweiz AG, 4900 Langenthal (CH)
(72) Erfinder: ROTH, Hans, CH-4922 Thunstetten (CH)
(74) Vertreter: Schalch, Rainer
(86) Internationale Anmeldenummer: PCT/CH2005/000157
(87) Internationale Veröffentlichungsnummer: WO 2006/096999

(56) Entgegenhaltungen:
- WO-A-20/04069374
- GB-A- 957 193
- US-A- 2 670 079
- US-A- 5 811 003
- US-A- 6 119 868

## Beschreibung

### TECHNISCHES GEBIET

Die Erfindung betrifft ein Verfahren zum Befestigen einer Niederhalteleiste zum Sichern eines Siebgeflechts einer Vibrationssiebmaschine gegen ein Abheben von einem Auflageflansch, eine Anwendung des Verfahrens, eine Vibrationssiebmaschine zur Durchführung des Verfahrens, einen Maschinenkörper für die Vibrationssiebmaschine sowie eine Verwendung der Vibrationssiebmaschine gemäss den Oberbegriffen der unabhängigen Patentansprüche.

### STAND DER TECHNIK

Vibrationssiebmaschinen werden in Asphaltmischanlagen hauptsächlich zum Klassieren von Sand, Split oder Kies eingesetzt und sind dort direkt über dem Heissmineralsilo angeordnet, so dass beim Betrieb typischerweise Temperaturen von mehreren Hundert Grad Celsius in der Siebmaschine herrschen. Als Siebeinsätze kommen deshalb Drahtgeflechte zum Einsatz, welche in Längsrichtung gespannt sind und in den Seitenbereichen auf von den Seitenwänden des Maschinenkörpers bereitgestellten Auflageflanschen aufliegen. Um ein Unterwandern des Siebgeflechts mit Siebgut in den Seitenbereichen sicher zu verhindert, werden zusätzlich direkt über dem Siebgeflecht Niederhalteleisten an den Seitenwänden angeordnet, welche ein Abheben des Siebgeflechts von den Auflageflanschen verhindern. Diese Massnahme führt jedoch neben dem gewünschten Effekt zu dem Problem, dass der Austausch eines defekten Siebgeflechts aufgrund der Demontage bzw. Wiedermontage der Niederhalteleisten sehr aufwendig ist und z.B. den Ausbau von Siebdecks und/oder von Verkleidungsblechen erforderlich macht. Dies ist mit einem enormen Zeitaufwand verbunden ist und verursacht entsprechende Kosten.

US 5,811,003 offenbart eine Schwingsiebmaschine, bei der Niederhalteleisten zum Sichern des Siebgeflechts gegen ein Abheben von den Auflageflanschen vorhanden sind. Die Befestigung der Niederhalteleisten erfolgt mit Hilfe von Keilen, welche die Niederhalteleisten gegen an den Seitenwänden des Maschinenkörpers gebildete Vorsprünge verspannen.

### DARSTELLUNG DER ERFINDUNG

Es stellt sich daher die Aufgabe, ein Verfahren zum Befestigen einer Niederhalteleiste, eine Vibrationssiebmaschine sowie einen Maschinenkörper für eine Vibrationssiebmaschine zur Verfügung zu stellen, welche die zuvor erwähnten Nachteile des Standes der Technik nicht aufweisen oder zumindest teilweise vermeiden.

Diese Aufgabe wird durch das Verfahren, die Vibrationssiebmaschine und den Maschinenkörper gemäss den unabhängigen Patentansprüchen gelöst.

Ein erster Aspekt der Erfindung betrifft ein Verfahren zur Befestigung einer Niederhalteleiste an einer Seitenwand des Machinenkörpers einer Vibrationssiebmaschine zwecks Niederhalten eines Siebgeflechts auf einem von der Seitenwand bereitgestellten Auflageflansch, zur Verhinderung eines Unterwanderns des Siebgeflechts mit Siebgut in diesem Bereich. Dabei werden von der Niederhalteleiste und von der Seitenwand des Maschinenkörpers gebildete Formelemente vom Innenraum des Maschinenkörpers her derartig miteinander in Eingriff gebracht, dass die Niederhalteleiste formschlüssig an der Seitenwand gehalten wird. Eine Zugänglichkeit der Aussenbereiche der Seitenwände ist also zur Montage bzw. Demontage der Niederhalteleisten nicht erforderlich und die Montage und Demontage der Niederhalteleiste kann von einem Ende des Maschinenkörpers her erfolgen, da die in Eingriff zu bringenden bzw. in Eingriff stehenden Formelemente unverlierbar an der Niederhalteleiste und der Seitenwand gebildet sind. Entsprechend kann gegenüber dem Stand der Technik auf eine vorgängige Demontage von Siebdecks und/- oder seitlichen Verkleidungen verzichtet werden.

Im erfindungsgemäßen Verfahren erfolgt das Ineingriffbringen der Formelemente dadurch, dass von der Niederhalteleiste gebildete Hakenelemente in von der Seitenwand gebildete Öffnungen eingehängt werden, was bevorzugterweise in Längsrichtung des Maschinenkörpers erfolgt. Hierdurch ist es besonders einfach, die Montage und Demontage der Niederhalteleisten von einem Ende des Maschinenkörpers aus und auch zwischen den Siebdecks durchzuführen.

Bevorzugterweise wird die durch Ineingriffbringen der Formelemente hergestellte Formschlussverbindung zwischen der Niederhalteleiste und der Seitenwand gegen ein Sichlösen im Betrieb gesichert, was in einer weiteren bevorzugten Ausführungsform mittels Federkraftbeaufschlagung der Niederhalteleiste in der Richtung des Ineingriffbringens der Formelemente geschieht. Auf diese Weise kann eine vorgespannte und dadurch sowohl spielfreie als auch temperaturdehnungstolerante Sicherung des Formschlusse zwischen der Niederhalteleiste und der Seitenwand hergestellt werden.

Ein zweiter Aspekt der Erfindung betrifft die Anwendung des Verfahrens gemäss dem ersten Aspekt der Erfindung bei der Herstellung von Vibrationssiebmaschinen für Asphaltmischanlagen. Bei solchen Anwendungen kommen die Vorteile der Erfindung besonders deutlich zum Tragen.

Ein dritter Aspekt der Erfindung betrifft eine Vibrationssiebmaschine für Asphaltmischanlagen, welche auch zur Durchführung des Verfahrens gemäss dem ersten Aspekt der Erfindung geeignet ist. Die Vibrationssiebmaschine weist einen Maschinenkörper und ein sich im Maschinenkörper zwischen dessen Seitenwänden erstreckendes Siebgeflecht auf, welches im Bereich der Seitenwände auf entlang denselben verlaufenden Auflageflanschen aufliegt und dort durch Niederhalteleisten gegen ein Abheben von den Auflageflanschen gesichert ist. Dabei sind die Niederhalteleisten und die Seitenwände des Maschinenkörpers derartig ausgebildet, dass eine Montage bzw. Demontage der Niederhalteleisten jeweils durch Ineingriffbringen bzw. Aussereingriffbringen von durch die Niederhalteleiste und die zugehörige Seitenwand gebildeten Formelementen vom Innenraum des Maschinenkörpers her möglich ist, es zur Herstellung der eigentlichen Verbindung zwischen Seitenwand und Niederhalteleiste also weder zusätzlicher loser Befestigungselemente, wie z.B. Schrauben und/oder Muttern, noch eines Zugangs zu den Ausssenseiten der Seitenwände bedarf.

Hierdurch ergibt sich, wie schon beim erfindungsgemässen Verfahren gemäss dem ersten Aspekt der Erfindung, der Vorteil, dass eine Montage bzw. Demontage der Niederhalteleisten von einem Ende des Maschinenkörpers her bewerkstelligt werden kann, ohne Siebdecks oder seitliche Verkleidungen entfernen zu müssen.

In der Vibrationssiebmaschine sind die Seitenwände des Maschinenkörpers und die Niederhalteleisten derartig ausgebildet, dass eine Montage bzw. Demontage der Niederhalteleisten jeweils durch Einhaken bzw. Aushaken von durch die Niederhalteleisten gebildeten Hakenelementen in bzw. aus zugehörigen Öffnungen in den Seitenwänden möglich ist, und zwar mit Vorteil in Längsrichtung des Machinenkörpers. Eine solche Ausgestaltung begünstigt eine einfache Montage und Demontage der Niederhalteleisten auch zwischen den Siebdecks.

Bevorzugterweise werden dabei die Niederhalteleisten jeweils mittels endseitigen Sicherungselementen in der eingehakten Position gesichert. Hierdurch kann ein unbeabsichtigtes Sichlösen der Niederhalteleisten im Betrieb sicher verhindert werden. Sind die Sicherungselemente zudem im Bereich eines Endes des Maschinenkörpers angeordnet, was bevorzugt ist, so sind sie gut zugänglich, was deren Montage bzw. Demontage erleichtert.

Vorteilhafterweise ist dabei das Sicherungselement als Vorspannelement ausgebildet, bevorzugterweise mit vorgespannten Tellerfederpacketen, da sich hierdurch eine sowohl spielfreie als auch dehnungstolerante Sicherung des Formschlusses zwischen der Niederhalteleiste und der Seitenwand bereiststellen lässt.

Weisen bei solchen Ausführungsformen mit als Vorspannelement ausgebildeten Sicherungselementen die Niederhalteleisten jeweils mehrere, in Längsrichtung hintereinander an diesen angeordnete Hakenelemente auf, welche im eingebauten Zustand in Öffnungen in der jeweiligen Seitenwand eintreten und diese in Vorspannrichtung hintergreifen, so ist es bevorzugt, wenn lediglich das am weitesten vom Vorspannelement entfernte Hackenelement einen Formschluss in Vorspannrichtung mit der Seitenwand bildet, so dass die Niederhalteleiste praktisch über ihre gesamte Länge vorgespannt ist und ungespannte Bereiche vermieden werden.

Auch ist es bei solchen Ausführungsformen bevorzugt, wenn die Erstreckung der Hakenelemente in Vorspannrichtung mit zunehmender Nähe zum Vorspannelement hin zunimmt, da so ein sicheres Einhängen gewährleistet werden kann, bei gleichzeitiger Verhinderung eines Anstehens der dem Vorspannelement nähergelegenen Hakenelemente in Vorspannrichtung in den zugehörigen Öffnungen der Seitenwand beim Spannen der Niederhalteleiste oder bei temperaturbedingten Dehnungen derselben.

Auch ist es bevorzugt, wenn das am weitesten vom Sicherungselement der Niederhalteleiste entfernte Hakenelement unter einem Winkel zwischen 20° und 70°, bevorzugter zwischen 30° und 50° zur Niederhalteleiste verläuft, während die übrigen Hakenelemente der Niederhalteleiste im wesentlichen parallel zu dieser verlaufen. Hierdurch wird es möglich, die Niederhalteleiste auf einfache Weise dadurch zu montierten, dass als erstes dieses unter einem Winkel zur Leiste verlaufende Hakenelement bei nicht parallel zur Seitenwand angeordneter Niederhalteleiste in die zugehörige Öffnung in der Seitenwand eingeführt wird und sodann die Niederhalteleiste gegen die Seitenwand geführt wird, unter einem Einführen der übrigen Hakenelemente in die zugehörigen Öffnungen in der Seitenwand und einem anschliessenden formschlüssigen Einhängen derselben in den Öffnungen.

In einer weiteren bevorzugten Ausführungsform der Vibrationssiebmaschine mit Niederhalteleisten mit Hakenelementen sind die Niederhalteleisten und die Seitenwände des Maschinenkörpers derartig ausgestaltet, dass bei montierten Niederhalteleisten die Öffnungen in den Seitenwänden, in welche die Hakenelemente der Niederhalteleisten eintreten, durch die Niederhalteleisten selbst oder durch an diesen angeordnete Körperlichkeiten, wie z.B. Abdeckbleche, verdeckt sind. Hierdurch kann ein Eintritt von Siebgut in den Befestigungsbereich und ein damit möglicherweise einhergehender abbrasiver Verschleiss oder ein Festgehen von Bauteilen verhindert werden.

In noch einer weiteren bevorzugten Ausführungsform der Vibrationssiebmaschine sind die Niederhalteleisten und die zugehörigen Auflageflansche an den Seitenwänden in Längsrichtung in der vertikalen Ebene gekrümmt, so dass die Niederhalteleisten beim Vorspannen eine Anpresskraft auf das Siebgeflecht ausüben können.

In noch einer weiteren bevorzugten Ausführungsform sind die Auflageflächen der Auflageflansche zum Siebgeflecht hin leicht geneigt und weisen die Niederhalteleisten eine entsprechende Gegenkontur auf. Hierdurch ergibt sich der Vorteil, dass eine elastische Klemmung des Geflechts zwischen dem Auflageflansch und der Niederhalteleiste erfolgt.

Weist die erfindungsgemässe Vibrationssiebmaschine mehrere sich hintereinander und/oder übereinander im Maschinenkörper zwischen den Seitenwänden des Maschinenkörpers erstreckende Siebgeflechte auf, welche im Bereich der Seitenwände auf Auflageflanschen aufliegen und durch Niederhalteleisten gegen ein Abheben von den Auflageflanschen gesichert sind, so treten die Vorteile der Erfindung besonders deutlich zu Tage.

Ein vierter Aspekt der Erfindung betrifft einen Maschinenkörper für eine Vibrationssiebmaschine gemäss dem dritten Aspekt der Erfindung, mit entlang den Seitenwänden verlaufenden Auflageflanschen für ein Siebgeflecht und mit oberhalb der Auflageflansche angeordneten Niederhalteleisten zum Sichern des Siebgeflechts gegen ein Abheben von den Auflageflanschen beim Betrieb. Die Seitenwände des Maschinenkörpers und die Niederhalteleisten sind dabei derartig ausgebildet, dass eine Montage bzw. Demontage der Niederhalteleisten jeweils durch Ineingriffbringen bzw. Aussereingriffbringen von durch die Niederhalteleiste und die zugehörige Seitenwand gebildeten Formelementen vom Innenraum des Maschinenkörpers her möglich ist. Mit einem solchen Maschinenkörper lassen sich auf einfache Weise erfindungsgemässe Vibrationssiebmaschinen herstellen oder bestehende Vibrationssiebmaschinen zu erfindungsgemässen umrüsten.

Ein fünfter Aspekt der Erfindung betrifft die Verwendung der Vibrationssiebmaschine gemäss dem dritten Aspekt der Erfindung als Heisssieb in der Asphaltproduktion. Bei dieser Verwendung kommen die Vorteile der Erfindung besonders deutlich zum Tragen.

### KURZE HESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen stark schematisierten Vertikalschnitt in Längsrichtung durch eine erfindungsgemässe Vibrationssiebmaschine;
Fig. 2 das Detail A aus Fig. 1;
Fig. 3a das Detail B aus Fig. 2;
Fig. 3b das Detail B in der Draufsicht;
Fig. 3c das Detail B in der Vorderansicht;
Fig. 4a das Detail C aus Fig. 2;
Fig. 4b das Detail C in der Draufsicht;
Fig. 4c das Detail C in der Vorderansicht;
Fig. 5 das Detail D aus Fig. 2.
Fig. 6a eine Seitenansicht der in Fig. 5 gezeigten Niederhalteleiste; und
Fig. 6b eine Draufsicht auf die in Fig. 5 gezeigte Niederhalteleiste.

### WEGE ZUR AUSFÜHRUNG DER ERFINDUNG

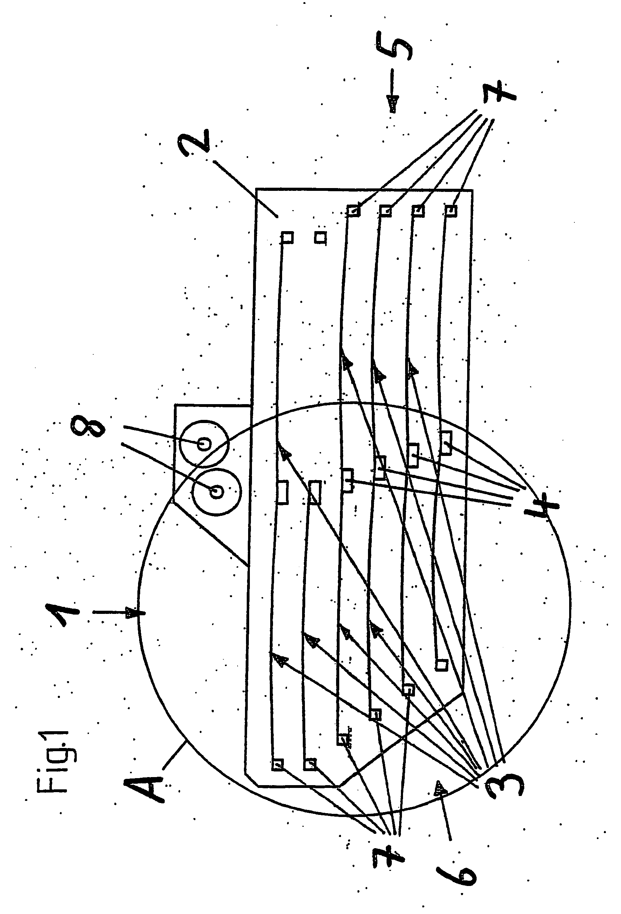

Fig. 1 zeigt stark schematisiert einen Vertikalschnitt in Längsrichtung durch den Maschinenkörper einer erfindungsgemässen Vibrationssiebmaschine 1 für Asphaltmischanlagen, welche angeordnet auf dem Heissmineralsilo zum Einsatz kommt. Wie erkennbar ist, sind im Maschinenkörper übereinander und hintereinander Siebgeflechteinsätze 3 derartig angeordnet, dass sie innerhalb des Maschinenkörpers sechs übereinanderliegende Siebdecks bilden, deren Maschenweite von oben nach unter abnimmt. Die einzelnen Siebgeflechteinsätze 3 jedes Siebdecks sind im mittleren Bereich des Maschinenkörpers jeweils an einem Spannbalken 4 (auch Mittelspannbalken genannt) befestigt und im Bereich der Einlaufseite 5 und der Auslaufseite 6 der Vibrationssiebmaschine 1 jeweils mittels gegen Tellerfederpackete oder Spiralfedern wirkenden Bolzen gegen eine Traverse 7 verspannt. Auf dem Maschinenkörper angeordnet sind die Unwuchterreger 8, welche im Betrieb den auf Federelementen (nicht gezeigt) gelagerten Maschinenkörper in Schwingungen versetzen.

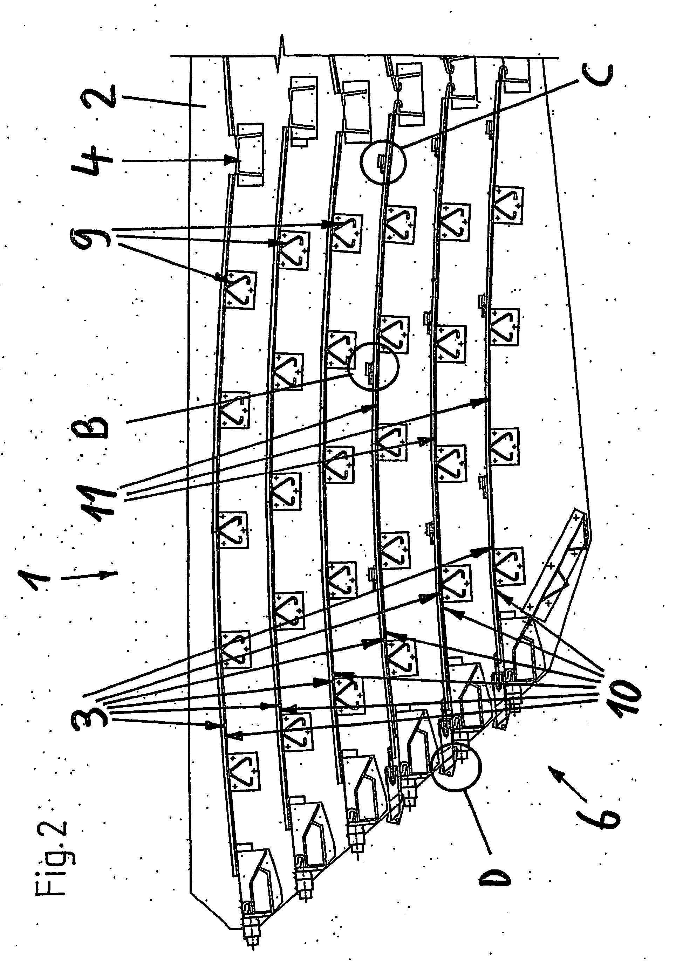

Wie aus Fig. 2 hervorgeht, welche das Detail A aus Fig. 1 zeigt, liegen die Siebgeflechteinsätze 3 auf in Längsrichtung in regelmässigen Abständen angeordneten Quertraversen 9 und im Bereich der Seitenwände 2 des Maschinenkörpers auf Auflageflanschen 10 auf, auf welchen die untersten drei Siebgeflechteinsätze 3 gegen ein Abheben im Betrieb mittels Niederhalteleisten 11 gesichert sind.

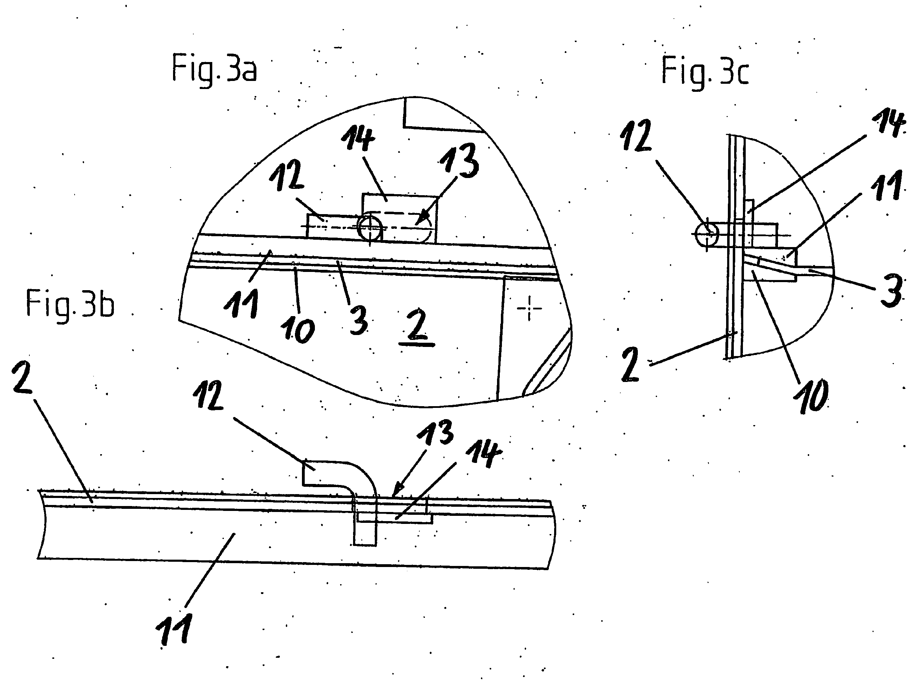

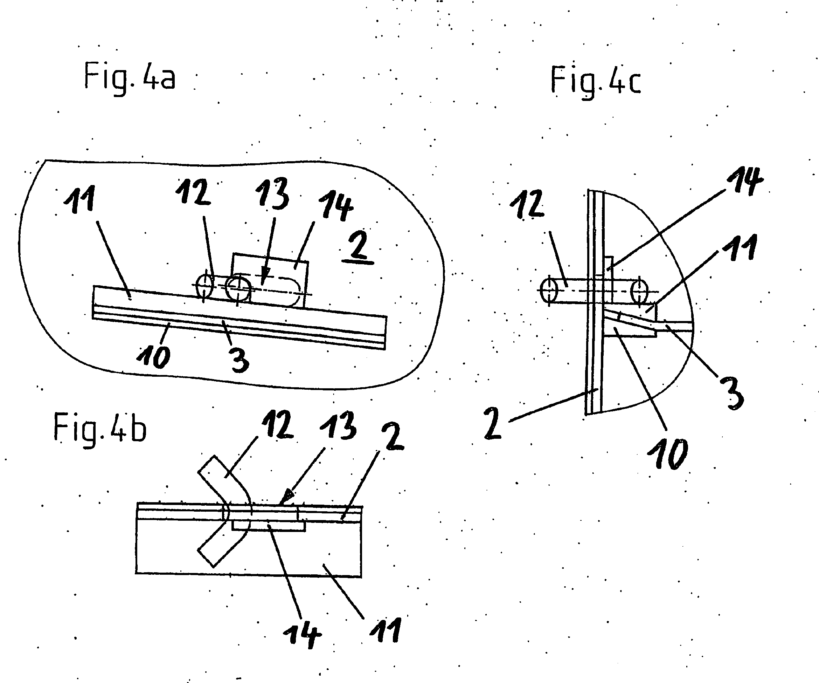

Wie aus den Figuren 3a-3c und 4a-4c hervorgeht, welche jeweils eine Seitenansicht, eine Draufsicht und eine Vorderansicht der Details B und C aus Fig. 2 zeigen, weisen die Niederhalteleisten 11 Hakenelemente 12 auf, mit denen sie in Öffnungen 13 in der Seitenwand 2 des Maschinenkörpers eingehängt sind. Dabei sind die Öffnungen 13 jeweils durch eine an der Niederhalteleiste 11 angeschweisste Blendplatte 14 gegen ein Austreten von Siebgut geschützt.

Wie aus den Figuren 3c und 4c ersichtlich ist, sind die Auflageflächen der Auflageflansche 10 zum Siebgeflecht 3 hin leicht geneigt. Die Niederhalteleisten 11 weisen eine entsprechende Gegenkontur auf, so dass eine elastische Klemmung des Geflechts 3 zwischen dem Auflageflansch 10 und der Niederhalteleiste 11 erfolgt.

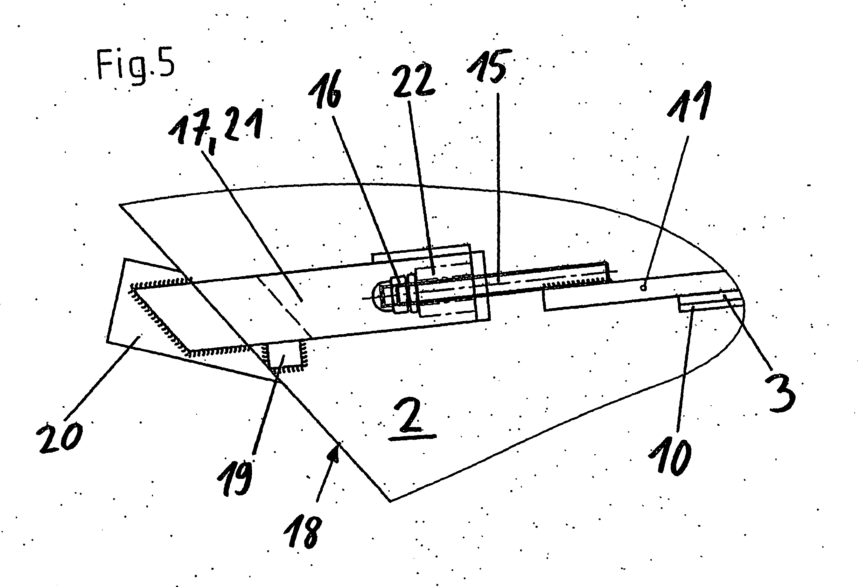

Fig. 5 zeigt anhand des Details D aus Fig. 2 das als Vorspannelement ausgebildete Sicherungselement 15, 16, 17, 22 einer der Niederhalteleisten 11, mit welchem diese gegen ein unbeabsichtigtes Sichlösen im Betrieb gesichert und gleichzeitig vorgespannt ist. Wie zu erkennen ist, weist die Niederhalteleiste 11 hierzu an dem in der Figur gezeigten Ende eine Gewindestange 15 auf, welche mittels einer Mutter 16 und einem Tellerfederpacket 22 gegen eine an der Stirnseite 18 der Seitenwand 2 des Maschinenkörpers eingehängte Widerlagerlasche 17 verspannt ist. Da die Stirnseite 18 einen Winkel kleiner 90° mit der Zugrichtung bildet, ist an der Seitenwand 2 ein Anschlagblech 19 angeschweisst, welches verhindert, dass sich die Widerlagerlasche 17 unter der Zugbeanspruchung nach unten verschiebt. Wie weiter zu erkennen ist, besteht die Widerlagerlasche 17 aus einem Widerlagerblech 20, welches an der Stirnseite 18 der Seitenwand 2 anliegt, und zwei zeitlich an dieses angeschweissten Blechen 21 (nur das innere ist gezeigt), welche die Stirnseite 18 der Seitenwand 2 umgreifen und von denen das innere über das Federpacket 22 und die Mutter 16 mit der Gewindestange 15 gekoppelt ist. Bei der in Fig. 1 gezeigten Vibrationssiebmaschine 1 sind alle Niederhalteleisten 11 auf diese Weise gesichert und vorgespannt.

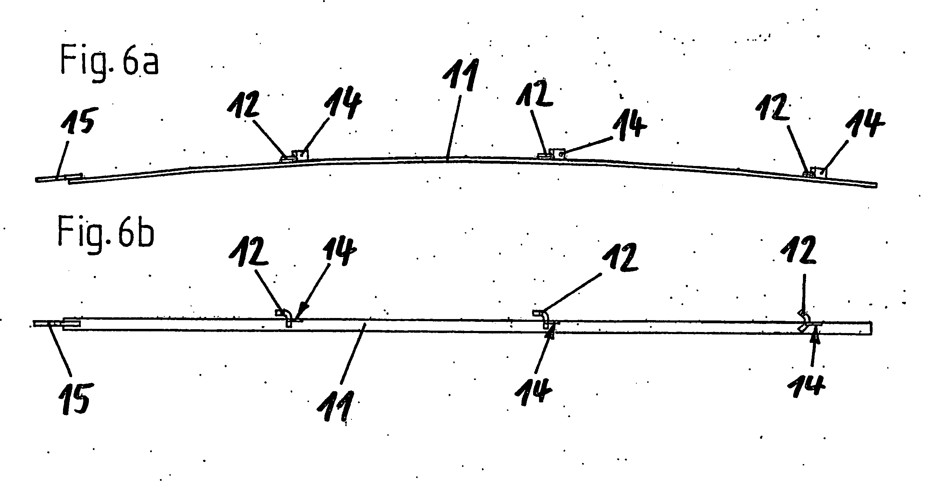

Die Figuren 6a und 6b zeigen eine Seitenansicht und eine Draufsicht der in Fig. 5 gezeigten Niederhalteleiste 11 mit den bereits zuvor beschriebenen Elementen 12, 14 und 15. Wie in Fig. 6a zu erkennen ist, ist die Niederhalteleiste 11 in der vertikalen Ebene leicht gekrümmt, und weist im vorliegenden Fall eine identische Krümmung auf wie der zugehörige Auflageflansch 10. Wie in Zusammenschau mit den Figuren 3b und 4b gut zu erkennen ist, verläuft das am weitesten vom Vorspannelement 15 16, 17, 22 der Niederhalteleiste 11 entfernte Hakenelement 12 (siehe Fig. 4b) unter einem Winkel von 45° zur Niederhalteleiste 11, während die übrigen Hakenelemente 12 der Niederhalteleiste 11 im wesentlichen parallel zu dieser verlaufen (siehe auch Fig. 3b). Hierdurch ist es möglich, die Niederhalteleiste 11 auf einfache Weise von der Auslaufseite 6 der Vibrationssiebmaschine 1 her zu montieren, indem als erstes dieses unter einem Winkel von 45° zur Leiste 11 verlaufende Hakenelement 12 in die zugehörige Öffnung 13 in den Seitenwand 2 eingeführt wird und sodann die Niederhalteleiste 11 gegen die Seitenwand 2 geführt wird, unter einem Einführen und Einhängen der übrigen Hakenelemente 12 in die zugehörigen Öffnungen 13 in der Seitenwand 2.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zum Befestigen einer Niederhalteleiste (11) zum Sichern eines Siebgeflechts (3) einer Vibrationssiebmaschine (1) gegen ein Abheben von einem Auflageflansch (10) an einer Seitenwand (2) des Maschinenkörpers der Schwingsiebmaschine (1), **dadurch gekennzeichnet, dass** von der Niederhalteleiste (11) gebildete Hakenelementen (12) vom Innenraum des Maschinenkörpers her derart in Öffnungen (13) in der Seitenwand (2) eingehängt werden, dass die Niederhalteleiste (11) formschlüssig an der Seitenwand (2) gehalten wird.

2. Verfahren nach Anspruch 1, **dadurch gekennzeichnet, dass** die Hakenelemente (12) in Längsrichtung des Maschinenkörpers eingehängt werden.

3. Verfahren nach Anspruch 2, **dadurch gekennzeichnet, dass** die durch das Einhängen der Hakenelemente (12) in die Öffnungen (13) hergestellte Formschlussverbindung zwischen der Niederhalteleiste (11) und der Seitenwand (2) gegen ein Sichlösen im Betrieb gesichert wird, insbesondere durch Beaufschlagen der Niederhalteleiste (11) in der in Eingriff gebrachten Position mit einer in Einhängerichtung wirkenden Federkraft.

4. Anwendung des Verfahrens gemäss einem der vorangehenden Ansprüche bei der Herstellung von Vibrationssiebmaschinen (1) für Asphaltmischanlagen.

5. Vibrationssiebmaschine für Asphaltmischanlagen, zur Durchführung des Verfahrens nach einem der vorangehenden Ansprüche, mit einem Maschinenkörper und einem sich im Maschinenkörper zwischen den Seitenwänden (2) des Maschinenkörpers erstreckenden Siebgeflecht (3), wobei das Siebgeflecht (3) im Bereich der Seitenwände (2) auf entlang den Seitenwänden (2) verlaufenden Auflageflanschen (10) aufliegt und durch Niederhalteleisten (11) gegen ein Abheben von den Auflageflanschen (10) gesichert ist, **dadurch gekennzeichnet, dass** die Seitenwände (2) des Maschinenkörpers und die Niederhalteleisten (11) derartig ausgebildet sind, dass eine Montage bzw. Demontage der Niederhalteleisten (11) jeweils durch Einhaken bzw. Aushaken von durch die Niederhalteleisten (11) gebildeten Hakenelementen (12) in bzw. aus zugehörigen Öffnungen (13) in den Seitenwänden (2) vom Innenraum des Maschinenkörpers her möglich ist.

6. Vibrationssiebmaschine nach Anspruch 5, **dadurch gekennzeichnet, dass** die Seitenwände (2) des Maschinenkörpers und die Niederhalteleisten (11) derartig ausgebildet sind, dass das Einhaken bzw. Aushaken jeweils in Längsrichtung des Machinenkörpers erfolgt.

7. Vibrationssiebmaschine nach Anspruch 6, **dadurch gekennzeichnet, dass** die Niederhalteleisten (11) jeweils mittels eines endseitigen Sicherungselements (15, 16, 17, 22) in der eingehakten Position gesichert sind, welches insbesondere im Bereich eines Endes des Maschinenkörpers angeordnet ist.

8. Vibrationssiebmaschine nach Anspruch 7, **dadurch gekennzeichnet, dass** das Sicherungselement (15, 16, 17, 22) als Vorspannelement (15, 16, 17, 22) ausgebildet ist, insbesondere mit vorgespannten oder vorspannbaren Federpacketen (22).

9. Vibrationssiebmaschine nach Anspruch 8, **dadurch gekennzeichnet, dass** die Niederhalteleisten (11) jeweils mehrere, in Längsrichtung hintereinander an diesen angeordnete Hakenelemente (12) aufweisen, welche in eingebautem Zustand in Öffnungen (13) in der jeweiligen Seitenwand (2) eintreten und diese in Vorspannrichtung hintergreifen, wobei lediglich das am weitesten vom Vorspannelement (15, 16, 17, 22) der Niederhalteleiste (11) entfernte Hackenelement (12) in Vorspannrichtung einen Formschluss mit der Seitenwand (2) bildet.

10. Vibrationssiebmaschine nach Anspruch 9, **dadurch gekennzeichnet, dass** die Erstreckung der Hakenelemente (12) in Vorspannrichtung mit zunehmender Nähe zum Vorspannelement (15, 16, 17, 22) zunimmt.

11. Vibrationssiebmaschine nach einem der Ansprüche 7 bis 10, **dadurch gekennzeichnet, dass** das am weitesten vom endseitigen Sicherungselement (15, 16, 17, 22) der Niederhalteleiste (11) entfernte Hackenelement (12) unter einem Winkel zwischen 20° und 70°, bevorzugter zwischen 30° und 50° zur Niederhalteleiste (11) verläuft, während die übrigen Hakenelemente (12) der Niederhalteleiste (11) im wesentlichen parallel zu dieser verlaufen.

12. Vibrationssiebmaschine nach einem der Ansprüche 5 bis 11, **dadurch gekennzeichnet, dass** die Niederhalteleisten (11) derartig ausgebildet sind, dass bei montierten Niederhalteleisten (11) die Öffnungen (13) in den Seitenwänden (2), in welche die Hakenelemente (12) der Niederhalteleisten (11) eintreten, durch von den Niederhalteleisten (11) bereitgestellte Körperlichkeiten (14) verdeckt sind.

13. Vibrationssiebmaschine nach einem der Ansprüche 5 bis 12, **dadurch gekennzeichnet, dass** die Niederhalteleisten (11) in Längsrichtung in der vertikalen Ebene gekrümmt sind.

14. Vibrationssiebmaschine nach einem der Ansprüche 5 bis 13, **dadurch gekennzeichnet, dass** die Auflageflächen der Auflageflansche (10) zum Siebgeflecht (3) hin leicht geneigt sind und die Niederhalteleisten (11) eine entsprechende Gegenkontur aufweisen.

15. Vibrationssiebmaschine nach einem der Ansprüche 5 bis 14, **dadurch gekennzeichnet, dass** die Vibrationssiebmaschine (1) mehrere sich hintereinander und/oder übereinander im Maschinenkörper zwischen den Seitenwänden (2) des Maschinenkörpers erstreckende Siebgeflechte (3) aufweist, welche im Bereich der Seitenwände (2) auf Auflageflanschen (10) aufliegen und durch Niederhalteleisten (11) gegen ein Abheben von den Auflageflanschen (10) gesichert sind.

16. Maschinenkörper für eine Vibrationssiebmaschine (1) nach einem der Ansprüche 5 bis 15, mit entlang den Seitenwänden (2) verlaufenden Auflageflanschen (10) für ein Siebgeflecht (3) und mit oberhalb der Auflageflansche (10) angeordneten Niederhalteleisten (11) zum Sichern des Siebgeflechts (3) gegen ein Abheben von den Auflageflanschen (10), **dadurch gekennzeichnet, dass** die Seitenwände (2) des Maschinenkörpers und die Niederhalteleisten (11) derartig ausgebildet sind, dass eine Montage bzw. Demontage der Niederhalteleisten (11) jeweils durch Einhaken bzw. Aushaken von durch die Niederhalteleisten (11) gebildeten Hakenelementen (12) in bzw. aus zugehörigen Öffnungen (13) in den Seitenwänden (2) vom Innenraum des Maschinenkörpers her möglich ist.

17. Verwendung der Vibrationssiebmaschine (1) nach einem der Ansprüche 5 bis 15 als Heisssieb in der Asphaltproduktion.

## Claims

1. Method of fixing a hold-down bar (11) for securing a screen mesh (3) of a vibratory screening machine (1) against lifting away from a support flange (10) on a side wall (2) of the machine body of the vibratory screening machine (1), **characterized in that** hook elements (12), formed by the hold-down bar (11), are mounted from within the machine body in openings (13) in the side wall (2) in such a way that the hold-down bar (11) is held by interlocking against the side wall (2).

2. Method according to claim 1, **characterized in that** the hook elements (12) are mounted in the longitudinal direction of the machine body.

3. Method according to claim 2, **characterized in that** the interlocking connection between the hold-down bar (11) and the side wall (2) produced by the mounting of the hook elements (12) in the openings (13) is secured against becoming loose during operation, especially by the hold-down bar (11) in the engaged position being acted upon by a spring force acting in the direction of mounting.

4. Use of the method according to any one of the preceding claims in the production of vibratory screening machines (1) for asphalt mixing apparatus.

5. Vibratory screening machine for asphalt mixing apparatus, for carrying out the method according to any one of the preceding claims, having a machine body and a screen mesh (3), which extends in the machine body between the side walls (2) of the machine body, the screen mesh (3) resting in the region of the side walls (2) on support flanges (10) which extend along the side walls (2) and being secured against lifting away from the support flanges (10) by hold-down bars (11), **characterized in that** the side walls (2) of the machine body and the hold-down bars (11) are constructed in such a way that the hold-down bars (11) can be mounted and demounted by hooking hook elements (12) formed by the hold-down bars (11) respectively into and out of associated openings (13) in the side walls (2) of the interior of the machine body.

6. Vibratory screening machine according to claim 5, **characterized in that** the side walls (2) of the machine body and the hold-down bars (11) are constructed in such a way that the hooking-in and hooking-out in each case take place in the longitudinal direction of the machine body.

7. Vibratory screening machine according to claim 6, **characterized in that** the hold-down bars (11) are each secured in the hooked-in position by means of an end securing element (15, 16, 17, 22) which is arranged especially in the region of one end of the machine body.

8. Vibratory screening machine according to claim 7, **characterized in that** the securing element (15, 16, 17, 22) is in the form of a biasing element (15, 16, 17, 22), especially having biased or biasable spring assemblies (22).

9. Vibratory screening machine according to claim 8, **characterized in that** the hold-down bars (11) each have a plurality of hook elements (12) arranged thereon one after the other in the longitudinal direction, which in the installed state pass into openings (13) in the respective side wall (2) and engage behind that wall in the biasing direction, with only the hook element (12) furthest away from the biasing element (15, 16, 17, 22) of the hold-down bar (11) forming an interlocking connection with the side wall (2) in the biasing direction.

10. Vibratory screening machine according to claim 9, **characterized in that** the extent of the hook elements (12) in the biasing direction increases with increasing proximity to the biasing element (15, 16, 17, 22).

11. Vibratory screening machine according to any one of claims 7 to 10, **characterized in that** the hook element (12) furthest away from the end securing element (15, 16, 17, 22) of the hold-down bar (11) runs at an angle of between 20° and 70°, preferably between 30° and 50°, with respect to the hold-down bar (11), while the remaining hook elements (12) of the hold-down bar (11) run substantially parallel thereto.

12. Vibratory screening machine according to any one of claims 5 to 11, **characterized in that** the hold-down bars (11) are constructed in such a way that, when the hold-down bars (11) are mounted, the openings (13) in the side walls (2) into which the hook elements (12) of the hold-down bars (11) pass are covered by the bodies (14) provided by the hold-down bars (11).

13. Vibratory screening machine according to any one of claims 5 to 12, **characterized in that** the hold-down bars (11) are curved in the vertical plane in the longitudinal direction.

14. Vibratory screening machine according to any one of claims 5 to 13, **characterized in that** the support surfaces of the support flanges (10) are slightly inclined towards the screen mesh (3) and the hold-down bars (11) have a corresponding counter-contour.

15. Vibratory screening machine according to any one of claims 5 to 14, **characterized in that** the vibratory screening machine (1) has a plurality of screen meshes (3) extending one after the other and/or one above the other in the machine body between the side walls (2) of the machine body, which screen meshes rest on support flanges (10) in the region of the side walls (2) and are secured by hold-down bars (11) against lifting away from the support flanges (10).

16. Machine body for a vibratory screening machine (1) according to any one of claims 5 to 15, having support flanges (10) for a screen mesh (3) which extend along the side walls (2) and having hold-down bars (11) arranged above the support flanges (10) for securing the screen mesh (3) against lifting away from the support flanges (10), **characterized in that** the side walls (2) of the machine body and the hold-down bars (11) are constructed in such a way that the hold-down bars (11) can be mounted and demounted by hooking hook elements (12) formed by the hold-down bars (11) respectively into and out of associated openings (13) in the side walls (2) of the interior of the machine body.

17. Use of the vibratory screening machine (1) in accordance with any one of claims 5 to 15 as a hot screen in asphalt production.

## Revendications

1. Procédé de fixation d'une baguette de retenue (11) pour le blocage d'un tissu de crible (3) d'une machine à crible vibrant (1) contre un soulèvement d'une bride d'appui (10) sur une paroi latérale (2) du bâti de machine de la machine à crible vibrant (1), **caractérisé en ce que** des éléments de crochet (12) formés par la baguette de retenue (11) sont suspendus depuis l'intérieur du bâti de machine dans des ouvertures (13) dans la paroi latérale (2) de telle sorte que la baguette de retenue (11) soit maintenue à complémentarité de formes sur la paroi latérale (2).

2. Procédé selon la revendication 1, **caractérisé en ce que** les éléments de crochet (12) sont suspendus dans le sens longitudinal du bâti de machine.

3. Procédé selon la revendication 2, **caractérisé en ce que** la liaison positive établie par l'accrochage des éléments de crochet (12) dans les ouvertures (13) entre la baguette de retenue (11) et la paroi latérale (2) est bloquée en fonctionnement contre un détachement, en particulier par la sollicitation de la baguette de retenue (11) dans la position amenée en engagement avec une force de ressort agissant dans le sens d'accrochage.

4. Application du procédé selon l'une des revendications 1 à 3 lors de la fabrication de machines à crible vibrant (1) pour des centrales de mélange d'asphalte.

5. Machine à crible vibrant pour des centrales de mélange d'asphalte, pour la mise en oeuvre du procédé selon l'une des revendications 1 à 3, avec un bâti de machine et un tissu de crible (3) s'étendant dans le bâti de machine entre les parois latérales (2) du bâti de machine, le tissu de crible (3) reposant dans la zone des parois latérales (2) sur des brides d'appui (10) s'étendant le long des parois latérales (2) et étant bloqué par des baguettes de retenue (11) contre un soulèvement des brides d'appui (10), **caractérisée en ce que** les parois latérales (2) du bâti de machine et les baguettes de retenue (11) sont réalisées de telle sorte qu'un montage ou démontage des baguettes de retenue (11) soit possible respectivement par l'accrochage ou le décrochage des éléments de crochet (12) formés par les baguettes de retenue (11) dans ou hors des ouvertures (13) afférentes dans les parois latérales (2) depuis l'intérieur du bâti de machine.

6. Machine à crible vibrant selon la revendication 5, **caractérisée en ce que** les parois latérales (2) du bâti de machine et les baguettes de retenue (11) sont réalisées de telle sorte que l'accrochage ou le décrochage soit effectué chaque fois dans le sens longitudinal du bâti de machine.

7. Machine à crible vibrant selon la revendication 6, **caractérisée en ce que** les baguettes de retenue (11) sont bloquées chaque fois au moyen d'un élément de blocage (15, 16, 17, 22) côté extrémité dans la position accrochée, lequel est disposé dans la zone d'une extrémité du bâti de machine.

8. Machine à crible vibrant selon la revendication 7, **caractérisée en ce que** l'élément de blocage (15, 16, 17, 22) est réalisé comme un élément de précontrainte (15, 16, 17, 22), en particulier avec des blocs-ressorts (22) précontraints ou pouvant être précontraints.

9. Machine à crible vibrant selon la revendication 8, **caractérisée en ce que** les baguettes de retenue (11) présentent chaque fois plusieurs éléments de crochet (12) disposés les uns derrière les autres dans le sens longitudinal sur celles-ci, qui entrent à l'état intégré dans des ouvertures (13) dans la paroi latérale (2) respective et engagent celle-ci par l'arrière dans le sens de précontrainte, l'élément de crochet (12) le plus éloigné de l'élément de précontrainte (15, 16, 17, 22) de la baguette de retenue (11) formant justement dans le sens de précontrainte une liaison positive avec la paroi latérale (2).

10. Machine à crible vibrant selon la revendication 9, **caractérisée en ce que** l'étendue des éléments de crochet (12) dans le sens de précontrainte augmente en même temps que la proximité de l'élément de précontrainte (15, 16, 17, 22) augmente.

11. Machine à crible vibrant selon l'une des revendications 7 à 10, **caractérisée en ce que** l'élément de crochet (12) le plus éloigné de l'élément de blocage (15, 16, 17, 22) côté extrémité de la baguette de retenue (11) s'étend selon un angle compris entre 20 et 70°, de préférence 30 et 50° par rapport à la baguette de retenue (11), alors que les éléments de crochet (12) restants de la baguette de retenue (11) s'étendent essentiellement parallèlement à celle-ci.

12. Machine à crible vibrant selon l'une des revendications 5 à 11, **caractérisée en ce que** les baguettes de retenue (11) sont réalisées de telle sorte que lorsque les baguettes de retenue (11) sont montées, les ouvertures (13) soient recouvertes dans les parois latérales (2), dans lesquelles les éléments de crochet (12) des baguettes de retenue (11) entrent, par des matérialités (14) mises à disposition par les baguettes de retenue (11).

13. Machine à crible vibrant selon l'une des revendications 5 à 12, **caractérisée en ce que** les baguettes de retenue (11) sont courbées dans le sens longitudinal dans le plan vertical.

14. Machine à crible vibrant selon l'une des revendications 5 à 13, **caractérisée en ce que** les surfaces d'appui des brides d'appui (10) sont légèrement inclinées vers le tissu de crible (3) et les baguettes de retenue (11) présentent un contour antagoniste correspondant.

15. Machine à crible vibrant selon l'une des revendications 5 à 14, **caractérisée en ce que** la machine à crible vibrant (1) présente plusieurs tissus de crible (3) s'étendant les uns derrière les autres et/ou les uns au-dessus des autres dans le bâti de machine entre les parois latérales (2) du bâti de machine, lesquels reposent dans la zone des parois latérales (2) sur des brides d'appui (10) et sont bloqués par des baguettes de retenue (11) contre un soulèvement des brides d'appui (10).

16. Bâti de machine pour une machine à crible vibrant (1) selon l'une des revendications 5 à 15, avec des brides d'appui (10) s'étendant le long des parois latérales (2) pour un tissu de crible (3) et avec des baguettes de retenue (11) disposées au-dessus des brides d'appui (10) pour le blocage du tissu de crible (3) contre un soulèvement des brides d'appui (10),
**caractérisé en ce que** les parois latérales (2) du bâti de machine et les baguettes de retenue (11) sont réalisées de telle sorte qu'un montage ou démontage des baguettes de retenue (11) soit possible chaque fois par l'accrochage ou le décrochage des éléments de crochet (12) formés par les baguettes de retenue (11) dans ou hors des ouvertures (13) afférentes dans les parois latérales (2) depuis l'intérieur du bâti de machine.

17. Utilisation de la machine à crible vibrant (1) selon l'une des revendications 5 à 15, comme crible à chaud dans la production d'asphalte.
